(19) **Europäisches Patentamt / European Patent Office / Office européen des brevets**

(11) **EP 2 616 794 B1**

(12) **FASCICULE DE BREVET EUROPEEN**

(45) Date de publication et mention de la délivrance du brevet:
**22.10.2014 Bulletin 2014/43**

(21) Numéro de dépôt: **11755086.3**

(22) Date de dépôt: **14.09.2011**

(51) Int Cl.:
***G01N 3/10*** *(2006.01)*

(86) Numéro de dépôt international:
**PCT/EP2011/065932**

(87) Numéro de publication internationale:
**WO 2012/035062 (22.03.2012 Gazette 2012/12)**

(54) **DISPOSITIF DE TEST EN FLUAGE D'UN ÉCHANTILLON TUBULAIRE**

TESTVORRICHTUNG ZUM PRÜFEN DES KRIECHVERHALTENS VON EINER RÖHRENFÖRMIGEN PROBE

DEVICE FOR CREEP TESTING OF A TUBULAR TEST OBJECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.09.2010 FR 1057306**

(43) Date de publication de la demande:
**24.07.2013 Bulletin 2013/30**

(73) Titulaire: **Commissariat à l'Énergie Atomique et aux Énergies Alternatives 75015 Paris (FR)**

(72) Inventeurs:
• **CARASSOU, Sébastien**
**F-91470 Limours (FR)**
• **MONGABURE, Philippe**
**F-94240 L'Hay Les Roses (FR)**
• **YVON, Pascal**
**F-92160 Antony (FR)**

(74) Mandataire: **Regimbeau**
**20, rue de Chazelles**
**75847 Paris Cedex 17 (FR)**

(56) Documents cités:
**FR-A1- 2 934 899    GB-A- 2 458 293
JP-A- 1 025 096**

EP 2 616 794 B1

**Description**

DOMAINE TECHNIQUE GENERAL

L'invention concerne un dispositif de test en fluage d'un échantillon tubulaire.

ETAT DE L'ART

L'intégrité des structures est un aspect très important de la sûreté des installations ou des réacteurs nucléaires. Connaître les variations dimensionnelles des éléments d'un assemblage combustible, les variations étant induites par l'environnement de ces structures (contraintes mécaniques, température, irradiation, etc.), contribue à assurer cette intégrité.

C'est dans ce contexte qu'on étudie, par le biais d'essais mécaniques, le comportement des éléments de l'assemblage combustible des réacteurs nucléaires, notamment la gaine des crayons combustibles. L'étude du comportement des éléments s'effectue par l'étude du comportement viscoplastique de matériaux composant des échantillons, sous irradiation, ainsi que du comportement viscoplastique hors irradiation sur des matériaux vierges ou irradiés.

Bien entendu, on cherche à réaliser ces essais mécaniques sur des échantillons dans des conditions les plus représentatives possibles de celles rencontrées en réacteur nucléaire, notamment en ce qui concerne le flux de neutrons irradiant le matériau, la température, et les contraintes internes multiaxiales, à savoir l'intensité, en tout point de l'échantillon, des forces internes au matériau et qui agissent sur une section droite unitaire passant par ce point.

Les contraintes se divisent en effet en deux groupes :

- les contraintes perpendiculaires à la section étudiée, dites normales, comme les contraintes de traction et de compression par exemple;
- les contraintes tangentielles, parallèles à la section étudiée, dites de cisaillement, transversales ou longitudinales.

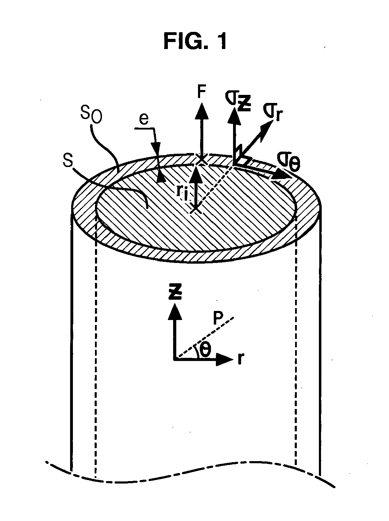

Dans le cas d'un échantillon tubulaire et longitudinal, on cherche notamment à caractériser, comme le montre la figure 1, les contraintes normales axiales $\sigma_{zz}$ (notées par simplicité dans la suite $\sigma_z$) selon un axe longitudinal Z, et les contraintes normales circonférentielles $\sigma_{\theta\theta}$ (notées par simplicité dans la suite $\sigma_\theta$), perpendiculaires à l'axe Z et à un rayon r de l'échantillon.

On a de manière classique, pour les valeurs constantes ou moyennes de ces contraintes :

$$\sigma_\theta = P \cdot \frac{ri}{e}$$

$$\sigma_z = \frac{P \cdot S + F}{S_0}$$

$$\sigma_r = -\frac{P}{2 + (e/ri)}$$

où

P est la pression interne à l'échantillon ;
ri est le rayon intérieur initial de l'échantillon ;
e est l'épaisseur initiale de l'échantillon ;
S est la section interne initiale de l'échantillon ;
F est la force axiale externe à l'échantillon ; et
$S_0$ est la section portante initiale de l'échantillon.

Suivant ces formulations, $\sigma_\theta$ est la valeur moyenne de la contrainte circonférentielle dans l'épaisseur, et $\sigma_r$ est la valeur moyenne de la contrainte radiale dans l'épaisseur (moyenne pondérée par l'épaisseur)

On définit alors le rapport de biaxialité $\alpha$ par la relation :

$$\alpha = \frac{\sigma_z}{\sigma_\theta}$$

Ou de manière plus opérationnelle en utilisant les grandeurs sur lesquelles il est possible d'agir directement :

$$\alpha = \alpha^{PI} \cdot (1 + \frac{St}{Si} \cdot \frac{Pt}{Pi - 1})$$

Avec

$$\alpha^{PI} = \frac{1}{2} \cdot \left( \frac{1}{1 + \frac{e}{2 \cdot ri}} \right)$$

On utilise habituellement trois types d'essais complémentaires pour caractériser le comportement viscoplastique des échantillons tubulaires. On parle de test en fluage de l'échantillon.

Le premier type d'essais s'effectue sur des échantillons pré-pressurisés. Ces essais consistent à mettre une quantité de gaz donnée à l'intérieur d'un échantillon scellé. Ces essais sont les plus robustes et se prêtent très bien à des campagnes d'essais contenant de nombreux échantillons, aussi bien en laboratoires froid, là où les échantillons ne sont pas irradiés, qu'en laboratoires chauds sur matériaux irradiés, ou encore sur des échantillons soumis à un flux de neutrons dans un réacteur nucléaire.

Le deuxième type d'essais s'effectue sur des échantillons en pression interne imposée. Ces essais consistent à imposer en continu une pression interne (grâce à du gaz ou de l'huile) dans un tronçon de tube fermé par un bouchon serré ou soudé. Les essais en pression interne imposée sont classiquement utilisés en laboratoires froids et en cellules chaudes, et permettent un contrôle du chargement mécanique, avec un rapport de biaxialité de 0,5.

Le troisième type d'essais s'effectue sur des échantillons en pression interne et effort axial imposés. Ces essais consistent à imposer des sollicitations selon deux axes sur l'échantillon, par application simultanée d'une pression interne, par huile par exemple, et d'une force axiale externe. On additionne ainsi une force axiale externe, de traction ou de compression, à la force de traction qui est naturellement induite par l'effet de fond dû à la pressurisation interne. On comprend que l'addition de la force axiale externe permet d'atteindre toute valeur du rapport de biaxialité. Les essais en pression imposée avec chargement axial sont ceux qui apportent le plus de valeur ajoutée du point de vue de la connaissance du comportement mécanique du matériau, en permettant le choix du chargement mécanique et le choix du rapport de biaxialité. Ils ne sont maîtrisés que dans seulement quelques laboratoires nucléaires.

Les documents FR 2 934 899, JP H01-025096 et GB 2458 293 présentent des systèmes pour de tels essais. Les essais précédents présentent cependant des inconvénients.

Les essais sur des échantillons pré-pressurisés ont un rapport de biaxialité $\alpha$ limité à une valeur unique proche de 0,5.

Les essais en pression interne imposée sont réservés à des essais de courte durée, et seules quelques expériences d'irradiation à pressurisation imposée sont possibles, nécessitant des dispositifs d'essai de haute technicité ne permettant pas l'utilisation simultanée de plusieurs échantillons.

Les essais en pression interne et effort axial imposés ne permettent pas l'utilisation simultanée de plusieurs échantillons, du fait de la haute technicité des dispositifs d'essai.

PRESENTATION DE L'INVENTION

L'invention propose de pallier au moins un de ces inconvénients.

A cet effet, l'invention propose un dispositif de test en fluage, caractérisé en ce qu'il comporte

- un échantillon à tester, tubulaire et longitudinal, et présentant

deux extrémités, et
une paroi interne,
- un tube interne à l'échantillon, présentant
un axe longitudinal,
deux extrémités,
une paroi externe,
un volume intérieur, et
une raideur axiale selon l'axe longitudinal inférieure à une raideur radiale, et
- deux bouchons, chaque bouchon
solidarisant une extrémité de l'échantillon et une extrémité du tube, et
fermant un espace interne entre l'échantillon et le tube par une surface entre la paroi interne de l'échantillon et la paroi externe du tube,

le dispositif permettant de définir un rapport de biaxialité quelconque en définissant indépendamment des contraintes axiales et circonférentielles à appliquer sur l'échantillon, en fonction
d'une part du ratio d'une pression dans l'espace interne sur une pression dans le volume intérieur du tube, et d'autre part du ratio de la surface entre la paroi interne de l'échantillon et la paroi externe du tube sur une surface fermant le volume intérieur du tube, au niveau des bouchons.

L'invention est avantageusement complétée par les caractéristiques suivantes, prises seules ou en une quelconque de leur combinaison techniquement possible :

- au moins une extrémité du tube comporte une ouverture refermable, permettant l'introduction d'un gaz sous pression dans le volume intérieur ;

- au moins une extrémité du tube comporte une ouverture refermable, permettant l'introduction d'un gaz sous pression dans l'espace interne ;

- le tube comporte au moins une clavette sur la paroi externe, à proximité d'au moins une extrémité du tube et au moins un bouchon comporte une rainure de forme complémentaire à la clavette, pour éviter une torsion du tube dans l'échantillon ;

- chaque extrémité du tube présente une forme tronconique ;

- chaque bouchon comporte une forme tronconique complémentaire à chaque extrémité du tube ;

- le tube comporte une partie centrale ondulée, lui conférant une raideur axiale selon l'axe longitudinal inférieure à une raideur radiale ;

- l'espace interne entre l'échantillon et le tube comporte un gaz dont la pression peut être différente ou égale à une pression extérieure au dispositif, et différente ou égale à la pression du volume intérieur ;

- le volume intérieur au tube comporte un gaz dont la pression est différente ou égale à une pression extérieure au dispositif.

- le volume intérieur ou l'espace interne est sous vide ; et

- l'échantillon est formé d'un alliage de Zirconium, d'un acier renforcé par dispersion d'oxyde (ODS), ou d'un composite à matrice céramique de type SiC/SiC.

L'invention présente de nombreux avantages.

L'invention permet de découpler les contraintes axiales et circonférentielles, pour permettre un choix facile du rapport de biaxialité, habituellement inaccessible par des moyens classiques, notamment en choisissant l'effet de fond de l'échantillon, ou la pression régnant dans le volume intérieur du tube interne à l'échantillon.

En effet, en choisissant notamment l'effet de fond de l'échantillon, la pression qui s'applique sur la surface entre la paroi interne de l'échantillon et la paroi externe du tube, au niveau des bouchons, déterminant notamment la contrainte axiale, ne s'applique pas à l'ensemble du fond de l'échantillon, et peut donc être limitée. Il n'y a en revanche que la pression précitée qui détermine la pression s'exerçant sur la paroi interne de l'échantillon.

L'invention est simple à mettre en oeuvre, et en particulier en laboratoire chaud ou même sous flux neutronique, par exemple en réacteur de recherche.

L'invention combine les avantages des essais pré-pressurisés (à savoir robustesse, nombre élevé d'échantillons disponibles en irradiation, etc.), tout en permettant le choix d'une valeur d'un rapport de biaxialité différente de 0,5.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1, déjà commentée, représente les contraintes s'exerçant sur un échantillon tubulaire longitudinal ;
- les figures 2A, 2B et 2C représentent schématiquement un dispositif selon l'invention ; et
- les figures 3 représentent différentes vues d'un exemple d'un mode de réalisation possible d'un dispositif selon l'invention.

Sur l'ensemble des figures, les éléments similaires portent des références numériques identiques.

DESCRIPTION DETAILLEE

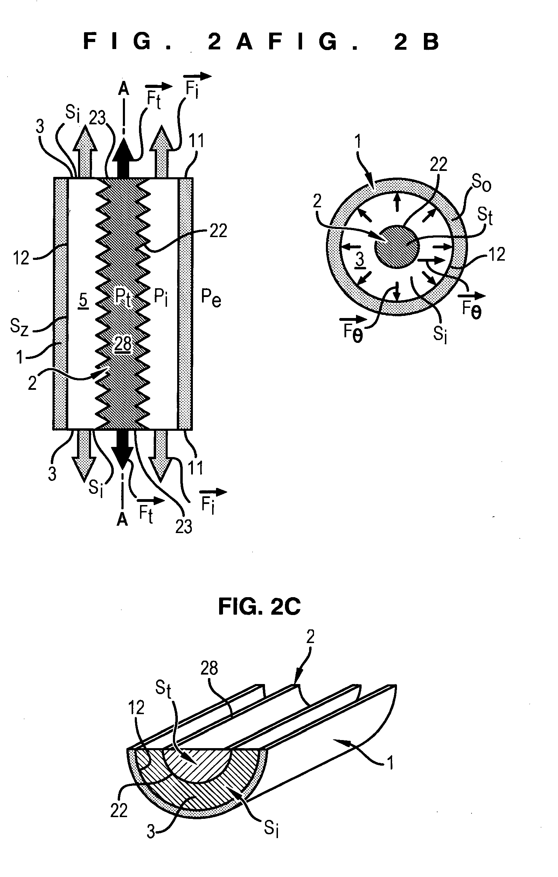

Les figures 2A à 2C représentent schématiquement un dispositif selon l'invention.

Comme le montrent ces figures, un dispositif de test en fluage selon l'invention comporte principalement un échantillon 1 à tester de forme tubulaire et longitudinal.

L'échantillon 1 présente deux extrémités 11, proximale et distale, ainsi qu'une paroi interne référencée par 12.

L'échantillon 1 à tester peut être en tout matériau, mais est préférentiellement composé d'un alliage de Zirconium, d'un acier renforcé par dispersion d'oxyde (ODS), ou d'un composite à matrice céramique de type SiC/SiC formant les gaines des crayons combustibles dans les réacteurs nucléaires actuels ou futurs.

Le dispositif comporte également un tube 2 interne à l'échantillon 1 et présentant un axe longitudinal (AA) et deux extrémités 23, proximale et distale.

Le tube 2 comporte également une paroi externe 22 et un volume intérieur 28, fermé comme, on le verra dans la suite de la présente description, par une surface St.

Comme le représentent schématiquement les zigzags de la figure 2A, le tube 2 présente une raideur axiale selon l'axe longitudinal (AA) inférieure à une raideur radiale selon une direction perpendiculaire à l'axe longitudinal (AA). La plus faible raideur axiale permet d'obtenir une bonne transmission axiale de la pression dans le volume intérieur 28.

Le dispositif comporte également deux bouchons 3 sur les extrémités 11 et 23 respectives de l'échantillon 1 et du tube 2.

Chaque bouchon 3 solidarise une extrémité 11 de l'échantillon 1 et une extrémité 23 du tube 2.

De même, chaque bouchon 3 ferme et délimite un espace 5 interne entre l'échantillon 1 et le tube 2.

La fermeture de l'espace 5 interne par chaque bouchon 3 s'effectue par une surface Si, visible sur les figures 2B et 2C, sur les bouchons 3. La surface Si est ainsi définie entre la paroi interne 12 de l'échantillon 1 et la paroi externe 22 du tube 2, sur chaque bouchon 3.

Comme on le verra dans la suite de la présente description, il est possible de choisir une pression Pt régnant dans le volume intérieur 28 du tube 2. Du fait de la solidarisation, par les bouchons 3, des extrémités 23 du tube 2 et 11 de l'échantillon 1, la pression Pt génère, par effet de fond, une force Ft axiale telle que :

$$Ft = Pt \cdot St$$

La force axiale Ft participe à une contrainte axiale $\sigma_z$ sur l'échantillon telle :

$$\sigma_{zt} = \frac{Ft}{S_0}$$

où $S_0$ est la section portante initiale de l'échantillon 1.

Comme on le verra dans la suite de la présente description, il est possible de choisir une pression Pi régnant dans l'espace interne 5. Du fait de la solidarisation, par les bouchons 3, des extrémités 23 du tube 2 et 11 de l'échantillon 1, la pression Pi génère, par effet de fond, une force Fi axiale telle que :

$$Fi = Pi \cdot Si$$

La force axiale Fi participe à une contrainte axiale $\sigma_z$ sur l'échantillon telle :

$$\sigma_{zi} = \frac{Fi}{S_0}$$

où So est la section portante initiale de l'échantillon 1. On a donc

$$\sigma_z = \sigma_{zt} + \sigma_{zi}$$

Par ailleurs, la pression Pi, s'exerçant sur une surface Sz de la paroi interne 12 de l'échantillon 1 selon l'axe (AA), génère des forces normales dans tout plan de normale circonférentielle, forces normales qui participent à une contrainte circonférentielle $\sigma_\theta$, perpendiculaires à l'axe (AA) et à un rayon r de l'échantillon telle que :

$$\sigma_\theta = Pi \cdot \frac{ri}{e}.$$

On comprend alors que le dispositif permet de définir indépendamment les contraintes axiales et circonférentielles à appliquer sur l'échantillon 1, en fonction

- d'une part du ratio $\dfrac{Pi}{Pt}$ de la pression Pi dans l'espace interne 5,sur la pression Pt dans le volume 28 intérieur du tube 2 et

- d'autre part du ratio $\dfrac{Si}{St}$ de la surface Si entre la paroi interne 12 de l'échantillon 1 et la paroi externe 22 du tube 2, au niveau des bouchons 3, sur la surface St fermant le volume intérieur 28 au niveau des bouchons 3.

En effet, lorsque l'espace 5 interne entre l'échantillon 1 et le tube 2 comporte un gaz dont la pression Pi est inférieure ou égale à une pression Pe, extérieure au dispositif, les contraintes circonférentielles $\sigma_\theta$ sont négligeables. Les contraintes axiales dues à la force Fi sont négligeables également.
Si dans ce cas en revanche, la pression Pt est supérieure à la pression Pe, alors les contraintes s'exerçant sur l'échantillon 1 sont principalement dues à la force axiale Ft, et sont par conséquent des contraintes axiales telles que :

$$\sigma_{zt} = \frac{Ft}{S_0}.$$

Si on définit le rapport de biaxialité $\alpha$ par la relation :

$$\alpha = \frac{\sigma_z}{\sigma_\theta}$$

on comprend que le rapport de biaxialité $\alpha$ est alors proche de l'infini, car les contraintes $\sigma_\theta$ sont négligeables.
On a alors en première approximation :

$$\alpha = \infty \quad \textbf{(E1)}$$

A l'inverse, lorsque la surface Si entre la paroi interne 12 de l'échantillon 1 et la paroi externe 22 du tube 2, au niveau des bouchons 3, est négligeable par rapport à la surface St fermant le volume intérieur 28, la composante $\sigma_{zi}$ de la contrainte axiale sur l'échantillon induite par la force Fi engendrée par la pression Pi sur la surface Si telle que :

$$\sigma_{zi} = \frac{Fi}{S_0}$$

et

$$Fi = Pi \cdot Si$$

est dans tous les cas négligeable par rapport à la contrainte circonférentielle induite par cette même pression

$$\sigma_\theta = Pi \cdot \frac{ri}{e}.$$

Si dans ce cas le volume intérieur 28 au tube 2 comporte un gaz dont la pression est inférieure ou égale à la pression Pe extérieure au dispositif, la composante Ft, donc $\sigma_{zt} = \dfrac{Ft}{S_0}$, est elle-même négligeable.
On a donc dans ce cas des contraintes circonférentielles s'exerçant sur l'échantillon 1 et des contraintes axiales négligeables. On obtient donc dans ce cas un rapport de biaxialité $\alpha$ proche de 0.

On a alors en première approximation :

$$\alpha = 0 \quad (E2)$$

On comprend donc qu'en jouant

- d'une part sur la valeur du ratio $\dfrac{Pi}{Pt}$, et

- d'autre part sur la valeur du ratio $\dfrac{Si}{St}$,

on peut obtenir toutes les valeurs du rapport de biaxialité $\alpha$ comprises entre les deux cas extrêmes des équations (E1) et (E2).

On comprend que le ratio $\dfrac{Si}{St}$ est déterminé par construction du dispositif, notamment par le diamètre externe du tube 2, alors que le ratio $\dfrac{Pi}{Pt}$ peut varier pour un même dispositif, en fonction de l'introduction ou non d'un gaz sous pression dans l'espace interne 5 et/ou le volume intérieur 28.

Cette différence de pression peut aussi être obtenue en mettant l'espace interne 5 ou le volume intérieur 28 sous vide.

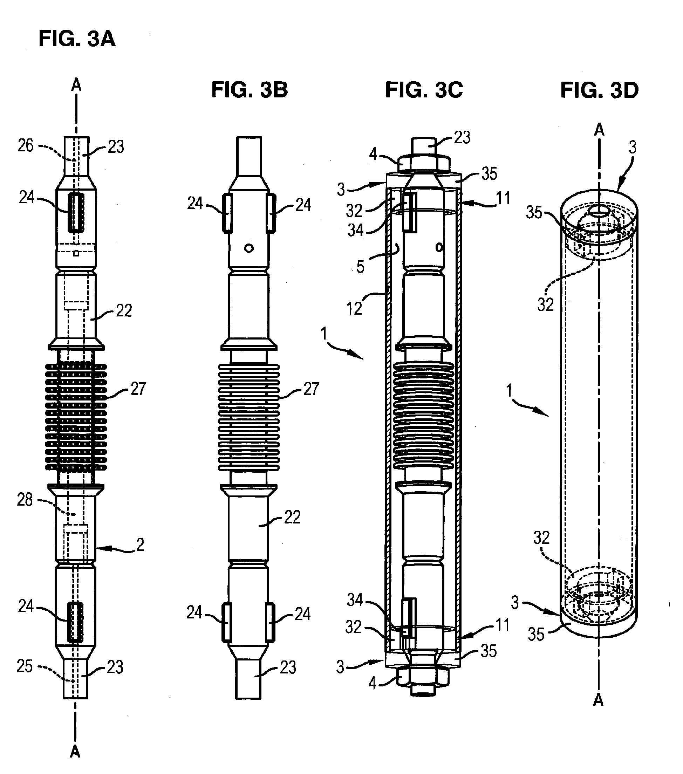

Les figures 3A, 3B, 3C et 3D représentent des vues distinctes d'un mode de réalisation préférentiel d'un dispositif selon l'invention.

Comme le montre la figure 3A, le tube 2 selon l'invention comporte principalement une partie centrale 27 ondulée, lui conférant une raideur axiale selon l'axe longitudinal (AA) inférieure à la raideur radiale.

Le tube 2 comporte également au moins une clavette 24 sur la paroi externe 22, à proximité d'au moins une extrémité 23 du tube 2.

De même, chaque extrémité 23 du tube 2 présente préférentiellement une forme tronconique mâle.

De plus, au moins une extrémité 23 du tube comporte une ouverture 25 refermable permettant l'introduction d'un gaz sous pression dans le volume intérieur 28. L'ouverture 25 refermable communique avec le volume intérieur 28.

De plus, au moins une autre extrémité 23 du tube comporte une ouverture 26 refermable permettant l'introduction d'un gaz sous pression dans l'espace interne 5. A cet effet, l'ouverture 26 forme un canal, par exemple en forme de T, débouchant dans l'espace interne 5 une fois le tube 2 monté dans l'échantillon 1 (comme le montre la figure 3A).

Les ouvertures 25 et 26 refermables peuvent refermées chacune par une pastille soudée par exemple, ou par tout autre moyen connu par l'homme du métier (par queusotage par exemple).

Comme le montrent les figures 3B et 3C, chaque bouchon 3 comporte une partie cylindrique interne 32 apte à coopérer avec la paroi interne 12 de l'échantillon 1, au niveau des extrémités 11.

A cet effet, chaque bouchon 3 comporte avantageusement une rainure 34 de forme complémentaire à la clavette 24. La coopération entre chaque clavette 24 et chaque rainure 34 évite une torsion du tube 22 dans l'échantillon 1.

Chaque bouchon 3 comporte également une partie cylindrique externe 35, externe à l'échantillon 1, et venant en butée avec une partie supérieure axiale de chaque extrémité 11 de l'échantillon 1.

Le bouchon 3 coopère ainsi par complémentarité de forme avec chaque extrémité 11.

L'étanchéité aux gaz est assurée par la complémentarité de formes, de sorte que le bouchon ferme bien l'espace 5 interne entre l'échantillon 1 et le tube 2.

Avantageusement, chaque extrémité 23 du tube 2 présente une paroi externe filetée, traversant chaque bouchon 3 et apte à coopérer avec un écrou 4 en butée sur la partie externe 35, pour solidariser une extrémité 11 de l'échantillon 1 et une extrémité 23 du tube.

On comprend que tout autre moyen d'assemblage de l'extrémité 23 au bouchon pourrait être utilisé (colle, soudage, etc).

La solidarisation mécanique des extrémités 11 et 23 est assurée par la complémentarité de formes.

A cet effet, chaque bouchon 3 comporte une forme tronconique femelle complémentaire à chaque extrémité 23 du tube 2.

## Revendications

1. Dispositif de test en fluage, **caractérisé en ce qu'**il comporte

> - un échantillon (1) à tester, tubulaire et longitudinal, et présentant
> deux extrémités (11), et
> une paroi interne (12),
> - un tube (2) interne à l'échantillon (1), présentant
> un axe longitudinal (AA),
> deux extrémités (23),
> une paroi externe (22),
> un volume intérieur (28), et
> une raideur axiale selon l'axe longitudinal (AA) inférieure à une raideur radiale, et
> - deux bouchons (3), chaque bouchon (3) solidarisant une extrémité (11) de l'échantillon (1) et une extrémité (23) du tube (2), et
> fermant un espace (5) interne entre l'échantillon (1) et le tube (2) par une surface (Si) entre la paroi interne (12) de l'échantillon (1) et la paroi externe (22) du tube (2),

le dispositif permettant de définir un rapport de biaxialité (α) quelconque en définissant indépendamment des contraintes axiales et circonférentielles à appliquer sur l'échantillon (1), en fonction

- d'une part du ratio d'une pression (Pi) dans l'espace interne (5) sur une pression (Pt) dans le volume (28) intérieur du tube (2), et
- d'autre part du ratio de la surface (Si) entre la paroi interne (12) de l'échantillon (1) et la paroi externe (22) du tube (2) sur une surface (St) fermant le volume intérieur (28) du tube (2), au niveau des bouchons (3).

2. Dispositif selon la revendication 1, dans lequel au moins une extrémité (23) du tube (2) comporte une ouverture (25) refermable, permettant l'introduction d'un gaz sous pression dans le volume (28) intérieur.

3. Dispositif selon l'une des revendications 1 ou 2, dans lequel au moins une extrémité (23) du tube (2) comporte une ouverture (26) refermable, permettant l'introduction d'un gaz sous pression dans l'espace interne (5).

4. Dispositif selon l'une des revendications 1 à 3, dans lequel :

- le tube (2) comporte au moins une clavette (24) sur la paroi externe (22), à proximité d'au moins une extrémité (23) du tube ; et
- au moins un bouchon (3) comporte une rainure (34) de forme complémentaire à la clavette (24),

pour éviter une torsion du tube (2) dans l'échantillon (1).

5. Dispositif selon l'une des revendications 1 à 4, dans lequel

- chaque extrémité (23) du tube (2) présente une forme tronconique ;
- chaque bouchon (3) comporte une forme tronconique complémentaire à chaque extrémité (23) du tube (2).

6. Dispositif selon l'une des revendications 1 à 5, dans lequel le tube comporte (2) une partie centrale (27) ondulée, lui conférant une raideur axiale selon l'axe longitudinal (AA) inférieure à une raideur radiale.

7. Dispositif selon l'une des revendications 1 à 6, dans lequel l'espace (5) interne entre l'échantillon (1) et le tube (2) comporte un gaz dont la pression peut être

- différente ou égale à une pression extérieure (Pe) au dispositif, et
- différente ou égale à la pression du volume intérieur (28).

8. Dispositif selon l'une des revendications 1 à 7, dans lequel le volume intérieur (28) au tube (2) comporte un gaz dont la pression est différente ou égale à une pression extérieure (Pe) au dispositif.

9. Dispositif selon l'une des revendications 1 à 8, dans lequel le volume intérieur (28) ou l'espace interne (5) est sous vide.

10. Dispositif selon l'une des revendications 1 à 9, dans lequel l'échantillon est formé d'un alliage de Zirconium, d'un acier renforcé par dispersion d'oxyde (ODS), ou d'un composite à matrice céramique de type SiC/SiC.

**Patentansprüche**

1. Testvorrichtung zum Prüfen des Kriechverhaltens, **dadurch gekennzeichnet, dass** sie aufweist:

- eine zu prüfende röhrenförmige und längliche Probe (1), die zwei Enden (11) und eine Innenwand (12) aufweist,
- ein innerhalb der Probe (2) angeordnetes Rohr (2), das eine Längsachse (AA), zwei Enden (23), eine Außenwand (22) und ein Innenvolumen (28) aufweist und eine axiale Steifheit in Richtung der Längsachse (AA) hat, die kleiner ist als eine radiale Steifheit, und
- zwei Stopfen (3), wobei jeder Stopfen (3) mit einem Ende (11) der Probe (1) und einem Ende (23) des Rohrs (2) verbunden ist und mittels einer Oberfläche (Si) zwischen der Innenwand (12) der Probe (1) und der Außenwand (22) des Rohrs (2) einen Innenraum (5) zwischen der Probe (1) und dem Rohr (2) schließt,
wobei die Vorrichtung erlaubt, ein beliebiges Biaxialitätsverhältnis (α) festzulegen, dadurch, dass sich an die Probe (1) anzulegende axialgerichtete und umfangsgerichtete Beanspruchungen unabhängig voneinander festlegen lassen als Funktion
- einerseits des Verhältnisses eines Drucks (Pi) im Innenraum (5) zu einem Druck (Pt) im Innenvolumen (28) des Rohrs (2) und
- andererseits des Verhältnisses der Oberfläche (Si) zwischen der Innenwand (12) der Probe (1) und der Außenwand (22) des Rohrs (2) zu einer Oberfläche (St), die das Innenvolumen (28) des Rohrs (2) im Bereich der Stopfen (3) schließt.

2. Vorrichtung nach Anspruch 1, wobei mindestens ein Ende (23) des Rohrs (2) eine wiederverschließbare Öffnung (25) aufweist, die das Einleiten eines unter Druck stehenden Gases in das Innenvolumen (28) erlaubt.

**3.** Vorrichtung nach einem der Ansprüche 1 oder 2, wobei mindestens ein Ende (23) des Rohrs (2) eine wiederverschließbare Öffnung (26) aufweist, die das Einleiten eines unter Druck stehenden Gases in den Innenraum (5) erlaubt.

**4.** Vorrichtung nach einem der Ansprüche 1 bis 3, wobei:

- das Rohr (2) an der Außenwand (22) in der Nähe mindestens eines Endes (23) des Rohrs mindestens einen Keil (24) aufweist; und
- mindestens ein Stopfen (3) eine Nut (34) aufweist, die komplementärförmig zu dem Keil (24) ist,

um eine Torsion des Rohrs (2) in der Probe (1) zu verhindern.

**5.** Vorrichtung nach einem der Ansprüche 1 bis 4, wobei

- jedes Ende (23) des Rohrs (2) kegelstumpfförmig ist;
- jeder Stopfen (3) eine Kegelstumpfform aufweist, die komplementär zu jedem Ende (23) des Rohrs (2) ist.

**6.** Vorrichtung nach einem der Ansprüche 1 bis 5, wobei das Rohr (2) einen wellenförmigen zentralen Abschnitt (27) aufweist, der ihm eine axiale Steifheit in Richtung der Längsachse (AA) verleiht, die kleiner ist als eine radiale Steifheit.

**7.** Vorrichtung nach einem der Ansprüche 1 bis 6, wobei der Innenraum (5) zwischen der Probe (1) und dem Rohr (2) ein Gas aufweist, dessen Druck

- unterschiedlich zu oder gleich einem Druck (Pe) außerhalb der Vorrichtung und
- unterschiedlich zu oder gleich dem Druck des Innenvolumens (28) sein kann.

**8.** Vorrichtung nach einem der Ansprüche 1 bis 7, wobei das Innenvolumen (28) des Rohrs (2) ein Gas aufweist, dessen Druck unterschiedlich zu oder gleich einem Druck (Pe) außerhalb der Vorrichtung ist.

**9.** Vorrichtung nach einem der Ansprüche 1 bis 8, wobei das Innenvolumen (28) oder der Innenraum (5) ein Vakuum aufweist.

**10.** Vorrichtung nach einem der Ansprüche 1 bis 9, wobei die Probe aus einer Zirkoniumlegierung, einem durch Oxiddispersion verstärkten Stahl (ODS) oder einem Verbundwerkstoff mit keramischer Matrix des SiC/SiC-Typs besteht.

**Claims**

**1.** Creep testing device, **characterised in that** it comprises

- a sample (1) to be tested, which is tubular and longitudinal and having
two ends (11), and
an internal wall (12),
- a tube (2) internal to the sample (1), having a longitudinal axis (AA),
two ends (23),
an external wall (22),
an interior volume (28), and
an axial stiffness along the longitudinal axis (AA) which is less than a radial stiffness, and
- two stoppers (3), each stopper (3) fastening one end (11) of the sample (1) and one end (23) of the tube (2), and closing an internal space (5) between the sample (1) and the tube (2) by a surface (Si) between the internal wall (12) of the sample (1) and the external wall (22) of the tube (2), the device making it possible to define any biaxial ratio $(\alpha)$ by independently defining axial and circumferential stresses to be applied to the sample (1), as a function of
- the ratio of a pressure (Pi) in the internal space (5) to a pressure (Pt) in the interior volume (28) of the tube (2), and
- the ratio of the area of the surface (Si) between the internal wall (12) of the sample (1) and the external wall (22) of the tube (2) to the area of a surface (St) closing the interior volume (28) of the tube (2), at the stoppers (3).

**2.** Device according to claim 1, wherein at least one end (23) of the tube (2) comprises a resealable opening (25), suitable for introducing a pressurised gas into the interior volume (28).

**3.** Device according to any of claims 1 or 2, wherein at least one end (23) of the tube (2) comprises a resealable opening (26), suitable for introducing a pressurised gas into the internal space (5).

**4.** Device according to any of claims 1 to 3, wherein:

- the tube (2) comprises at least one key (24) on the external wall (22), in the vicinity of at least one end (23) of the tube; and
- at least one stopper (3) comprises a groove (34) having a complementary shape with respect to the key (24),

to prevent twisting of the tube (2) in the sample (1).

5.  Device according to any of claims 1 to 4, wherein

    - each end (23) of the tube (2) has a tapered shape;
    - each stopper (3) comprises a complementary tapered shape with respect to each end (23) of the tube (2).

6.  Device according to any of claims 1 to 5, wherein the tube (2) comprises a corrugated central portion (27), providing an axial stiffness along the longitudinal axis (AA) which is less than a radial stiffness.

7.  Device according to any of claims 1 to 6, wherein the internal space (5) between the sample (1) and the tube (2) comprises a gas wherein the pressure may be

    - different or equal to a pressure (Pe) external to the device, and
    - different or equal to the pressure of the interior volume (28).

8.  Device according to any of claims 1 to 7, wherein the interior volume (28) to the tube (2) comprises a gas wherein the pressure is different or equal to a pressure (Pe) external to the device.

9.  Device according to any of claims 1 to 8, wherein the interior volume (28) or internal space (5) is in a vacuum condition.

10. Device according to any of claims 1 to 9, wherein the sample is formed from a zirconium alloy, oxide dispersion strengthened steel (ODS), or a SiC/SiC ceramic matrix composite.

## FIG. 1

# FIG. 2A FIG. 2B

# FIG. 2C

**FIG. 3A**

**FIG. 3B**  **FIG. 3C**  **FIG. 3D**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2934899
- JP H01025096 B
- GB 2458293 A